# EUROPEAN PATENT APPLICATION

(11) **EP 4 462 828 A1**
(43) Date of publication of application: **13.11.2024**
(21) Application number: 22923653.4
(22) Date of filing: 29.12.2022
(51) Int. Cl.: H04W 4/40, H04W 28/20, H04W 28/18, H04W 72/02

(54) **SIDELINK COMMUNICATION METHOD AND DEVICE, STORAGE MEDIUM, AND COMPUTER PROGRAM PRODUCT**

(30) Priority: 30.01.2022 CN 202210114229
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN)
(74) Representative: Gill Jennings & Every LLP
(86) International application number: PCT/CN2022/143430
(87) International publication number: WO 2023/142868

(57) **Abstract**

Embodiments of this disclosure relate to a sidelink communication method, a device, a storage medium, and a computer program product. The method provided herein includes: A first user equipment receives a first message from a second user equipment; the first user equipment determines, based on the first message, a first frequency used to communicate with the second user equipment, where the first user equipment supports at least the first frequency and a second frequency, and the second user equipment supports at least the first frequency; and the first user equipment sends a second message to the second user equipment at the first frequency, where the second message is associated with a unicast connection establishment process or a discovery process. Based on a communication mechanism provided in this disclosure, the unicast connection establishment process or the discovery process can be performed on a carrier supported by all terminal devices that perform communication, to ensure that the unicast connection establishment process or the discovery process can be correctly performed, thereby improving sidelink communication quality.

## Description

This application claims priority to Chinese Patent Application No. 202210114229.2, filed with the China National Intellectual Property Administration on January 30, 2022 and entitled "SIDELINK COMMUNICATION METHOD, DEVICE, STORAGE MEDIUM, AND COMPUTER PROGRAM PRODUCT", which is incorporated herein by reference in its entirety.

### TECHNICAL FIELD

Embodiments of this disclosure generally relate to the field of communication technologies, and more specifically, to a sidelink communication method, a device, a storage medium, and a computer program product.

### BACKGROUND

In a wireless communication system, data communication may be performed between user equipments (UEs) through radio coverage provided by a network device, or communication may be directly performed through a sidelink (sidelink or SL) without the network device. A typical application scenario of SL communication is vehicle-to-everything (V2X). In the vehicle-to-everything, each vehicle may be considered as one UE, and data transmission is directly performed between the UEs through the SL without a network. This can effectively reduce a communication delay.

In a V2X communication scenario, a mapping relationship (for broadcast communication, optionally including multicast communication) between a service type (for example, a PSID, an ITS-AID, or an AID) and a destination ID (for example, a destination L2 ID) is configured for an upper layer of a UE, and a mapping relationship between a service type and a carrier is further configured for the upper layer of the UE. LTE V2X supports only broadcast communication, but supports a multi-carrier operation. NR V2X supports unicast, multicast, and broadcast communication, but supports only a single-carrier operation in a current communication system. Considering that an NR SL is expected to support the multi-carrier operation in the future, a sidelink communication mechanism needs to be further enhanced.

### SUMMARY

In general, example embodiments of this disclosure provide a sidelink communication method, a device, a computer-readable storage medium, and a computer program product.

According to a first aspect of this disclosure, a communication method is provided. In the method, a first user equipment receives a first message from a second user equipment. The first user equipment determines, based on the first message, a first frequency used to communicate with the second user equipment, where the first user equipment supports at least the first frequency and a second frequency, and the second user equipment supports at least the first frequency. The first user equipment sends a second message to the second user equipment at the first frequency, where a destination identifier of the second message is a first layer 2 identifier, and the second message is associated with a unicast connection establishment process or a discovery process

In a first implementation of the first aspect, the second message includes a PC5-RRC message or a PC5-S message. The PC5-S message includes one of the following: a direct communication request message, a direct security mode command message, a direct security mode complete message, a direct communication accept message, a discovery solicitation message, a discovery response message, and a discovery announcement message.

In a second implementation of the first aspect, in the method, the first frequency used to communicate with the second user equipment may be determined in the following manner: The first user equipment determines that the first message is received at the first frequency; and the first user equipment determines that the first frequency is to be used to send the second message, where the second message is used as a response to the first message. In this way, based on a communication mechanism provided in this embodiment of this disclosure, a terminal device determines a carrier for receiving a message as a carrier used to send a response message of the message, to ensure that the unicast connection establishment process or the discovery process can be correctly performed, thereby improving sidelink communication quality.

In a third implementation of the first aspect, the first message includes first frequency information, and the first frequency information indicates a frequency supported by the second user equipment. In the method, the first frequency used to communicate with the second user equipment is determined in the following manner: The first user equipment determines the first frequency based on the first frequency information, where the second message is used as a response to the first message. In this way, based on a communication mechanism provided in this embodiment of this disclosure, a terminal device may show exchange carrier capability information through the unicast connection establishment process or the discovery process, so that a message in the unicast connection establishment process or the discovery process can be received by a peer terminal device, to ensure that the unicast connection establishment process or the discovery process can be correctly performed, thereby improving sidelink communication quality.

In a fourth implementation of the first aspect, in the method, the first frequency is determined in the following manner: The first user equipment determines, based on the first frequency information and a frequency supported by the first user equipment, a frequency jointly supported by the first user equipment and the second user equipment; and the first user equipment selects the first frequency from the jointly supported frequency to send the second message.

In a fifth implementation of the first aspect, the second message includes second frequency information, and the second frequency information indicates the frequency supported by the first user equipment or indicates the jointly supported frequency.

In a sixth implementation of the first aspect, the second message includes a PC5-RRC message or a PC5-S message. The PC5-S message includes one of the following: a direct communication request message, a direct security mode command message, a direct security mode complete message, a direct communication accept message, a discovery solicitation message, a discovery response message, and a discovery announcement message.

In a seventh implementation of the first aspect, the method further includes: The first user equipment sends a sidelink user equipment information message to a base station, where the sidelink user equipment information message indicates that the first layer 2 identifier is associated with the first frequency, the source identifier of the first message is the first layer 2 identifier, a destination identifier of the first message is a second layer 2 identifier, a source identifier of the second message is a third layer 2 identifier, and the second layer 2 identifier is the same as the third layer 2 identifier, or the second layer 2 identifier is different from the third layer 2 identifier.

In an eighth implementation of the first aspect, the method further includes: The first user equipment sends a sidelink user equipment information message to a base station, where the sidelink user equipment information message indicates that the first layer 2 identifier is associated with the jointly supported frequency, the source identifier of the first message is the first layer 2 identifier, a destination identifier of the first message is a second layer 2 identifier, a source identifier of the second message is a third layer 2 identifier, and the second layer 2 identifier is the same as the third layer 2 identifier, or the second layer 2 identifier is different from the third layer 2 identifier.

In a ninth implementation of the first aspect, the method further includes: The first user equipment determines a candidate frequency used to communicate with the second user equipment, where the candidate frequency includes at least the first frequency.

In a tenth implementation of the first aspect, the candidate frequency is determined based on at least frequency information that is indicated by a user equipment capability exchange message received from the second user equipment and that is associated with the second user equipment, and the user equipment capability exchange message includes a user equipment capability enquiry message or a user equipment capability information message.

In an eleventh implementation of the first aspect, the candidate frequency is further determined based on at least one of a frequency supported by the first user equipment and frequency information corresponding to service type information.

In a twelfth implementation of the first aspect, the method further includes: The first user equipment sends a user equipment capability exchange message to the second user equipment, where the user equipment capability exchange message includes information indicating that the first layer 2 identifier is associated with the candidate frequency, the user equipment capability exchange message includes a user equipment capability enquiry message or a user equipment capability information message, and the source identifier of the first message is the first layer 2 identifier.

In a thirteenth implementation of the first aspect, the method further includes: The first user equipment sends sidelink user equipment information to a base station, where the sidelink user equipment information includes that the first layer 2 identifier is associated with the candidate frequency, and the destination identifier of the second message is the first layer 2 identifier.

In a fourteenth implementation of the first aspect, the method further includes: After obtaining a sidelink grant, the first user equipment selects, based on frequency information associated with the sidelink grant, a destination identifier corresponding to the frequency information to perform sidelink transmission.

In a fifteenth implementation of the first aspect, the first frequency corresponds to a carrier or a bandwidth part.

In a sixteenth implementation of the first aspect, the first user equipment supports multi-carrier communication, and the second user equipment supports single-carrier communication or multi-carrier communication.

This embodiment of this disclosure provides a sidelink communication mechanism. A carrier or a bandwidth part used to implement the unicast connection establishment process or the discovery process may be determined based on the mechanism, so that the unicast connection establishment process or the discovery process can be correctly performed between terminal devices having different carrier capabilities. In addition, based on the mechanism, carrier information of a corresponding message may be updated after subsequent capability exchange of UEs in the unicast connection is completed. This improves sidelink communication quality and system performance.

According to a second aspect of this disclosure, a communication method is provided. In the method, a first user equipment obtains first indication information for a default frequency, where the default frequency is used to communicate with a second user equipment. The first user equipment transmits a third message to the second user equipment at the default frequency, where the third message includes a PC5-RRC message or a PC5-S message. The PC5-S message includes at least one of the following: a direct communication request message, a direct security mode command message, a direct security mode complete message, a direct communication accept message, a discovery solicitation message, a discovery response message, and a discovery announcement message.

Based on a communication mechanism in this disclosure, the default frequency used for a unicast connection establishment process or a discovery process is specified, to ensure correct transmission of a message of the unicast connection establishment process or a message of the discovery process. Particularly, when UEs at two ends have different carrier capabilities, using the default frequency can ensure that a message is received by a peer UE. This helps correctly perform the unicast connection establishment process or the discovery process, and improve sidelink communication quality.

In a first implementation of the second aspect, the default frequency is preconfigured by a network or predefined.

In a second implementation of the second aspect, the default frequency is obtained from an upper layer of the first user equipment.

In a third implementation of the second aspect, the method further includes: The first user equipment obtains second indication information, where the second indication information includes upper layer indication information or indication information received from a network, to indicate whether a third message associated with a destination layer 2 identifier or a service type is transmitted based on the default frequency.

In a fourth implementation of the second aspect, a fourth message associated with the third message is also transmitted at the default frequency.

In a fifth implementation of the second aspect, the method further includes: After obtaining a sidelink grant, the first user equipment selects, based on frequency information associated with the sidelink grant, a destination identifier corresponding to the frequency information to perform sidelink transmission.

In a sixth implementation of the second aspect, the default frequency corresponds to a carrier or a bandwidth part.

In a seventh implementation of the second aspect, the first user equipment supports multi-carrier communication, and the second user equipment supports single-carrier communication or multi-carrier communication.

According to a third aspect of this disclosure, a communication device is provided. The communication device includes at least one processor and at least one memory including computer program code. The at least one memory and the computer program code may work with the at least one processor to enable the at least one processor to perform the method according to the first aspect of this disclosure.

According to a fourth aspect of this disclosure, a communication device is provided. The communication device includes at least one processor and at least one memory including computer program code. The at least one memory and the computer program code may work with the at least one processor to enable the at least one processor to perform the method according to the second aspect of this disclosure.

According to a fifth aspect of this disclosure, a computer-readable storage medium is provided. The computer-readable storage medium stores computer-executable instructions, and when the computer-executable instructions are executed by a processor, the processor is enabled to perform the method according to the first aspect of this disclosure.

According to a sixth aspect of this disclosure, a computer-readable storage medium is provided. The computer-readable storage medium stores computer-executable instructions, and when the computer-executable instructions are executed by a processor, the processor is enabled to perform the method according to the second aspect of this disclosure.

According to a seventh aspect of this disclosure, a computer program product is provided. The computer program product includes computer-executable instructions, and when the computer-executable instructions are executed by a processor, the processor is enabled to perform the method according to the first aspect of this disclosure.

According to an eighth aspect of this disclosure, a computer program product is provided. The computer program product includes computer-executable instructions, and when the computer-executable instructions are executed by a processor, the processor is enabled to perform the method according to the second aspect of this disclosure.

According to a ninth aspect of this disclosure, a communication apparatus is provided. The communication apparatus includes a receiving unit, a determining unit, and a sending unit. The receiving unit is configured to receive ta first message from a second user equipment. The determining unit is configured to determine, based on the first message, a first frequency used to communicate with the second user equipment, where the communication apparatus supports at least the first frequency and a second frequency, and the second user equipment supports at least the first frequency. The sending unit is configured to send a second message to the second user equipment at the first frequency, where a destination identifier of the second message is a first layer 2 identifier, and the second message is associated with a unicast connection establishment process or a discovery process.

According to a tenth aspect of this disclosure, a communication apparatus is provided. The communication apparatus includes an obtaining unit and a transmission unit. The obtaining unit is configured to obtain first indication information for a default frequency, where the default frequency is used to communicate with a second user equipment. The transmission unit is configured to transmit a PC5-RRC message or a PC5-S message to the second user equipment at the default frequency. The PC5-S message includes at least one of the following: a direct communication request message, a direct security mode command message, a direct security mode complete message, a direct communication accept message, a discovery solicitation message, a discovery response message, and a discovery announcement message.

In this disclosure, in consideration of different versions of sidelink UEs (for example, a UE supporting both a single-carrier operation and a multi-carrier operation, a UE supporting only a single-carrier operation, and a UE supporting different carrier capabilities), a communication mechanism is provided to support a unicast connection establishment or discovery process. This mechanism can ensure that messages in these processes can be received by a peer UE, and avoid a case in which the peer UE cannot receive a corresponding message because transmission is performed on a sidelink carrier that is not supported by the peer UE. The provided communication mechanism enables a unicast connection establishment or discovery process to be normally performed. This improves communication quality and performance of a sidelink.

### BRIEF DESCRIPTION OF DRAWINGS

The foregoing and other features, advantages, and aspects of embodiments of this disclosure become more apparent with reference to the accompanying drawings and with reference to the following detailed descriptions. In the accompanying drawings, same or similar reference numerals represent same or similar elements.
FIG. 1A is a diagram of a discovery process;
FIG. 1B is a diagram of a discovery process;
FIG. 2 is a diagram of a unicast connection establishment process;
FIG. 3 is a diagram of an example network environment in which an example embodiment of this disclosure can be implemented;
FIG. 4 is a signaling diagram of an interaction process used for sidelink communication according to an example embodiment of this disclosure;
FIG. 5 is a flowchart of a sidelink communication method according to an example embodiment of this disclosure;
FIG. 6 is a flowchart of a sidelink communication method according to an example embodiment of this disclosure;
FIG. 7 is a block diagram of a communication apparatus according to an example embodiment of this disclosure;
FIG. 8 is a block diagram of a communication apparatus according to an example embodiment of this disclosure; and
FIG. 9 is a block diagram of a communication apparatus according to an example embodiment of this disclosure.

### DESCRIPTION OF EMBODIMENTS

The following describes some example embodiments with reference to the accompanying drawings. Although example embodiments of this disclosure are shown in the accompanying drawings, it should be understood that this disclosure may be implemented in various forms, and should not be construed as being limited to embodiments described herein. On the contrary, these embodiments are provided to thoroughly and completely understand this disclosure. It should be understood that the accompanying drawings and embodiments of this disclosure are merely used as examples, but are not intended to limit the protection scope of this disclosure.

The term "communication network" or "wireless network" used in this specification refers to a network that complies with any appropriate communication standard, for example, long term evolution (LTE), LTE advanced (LTE-A), wideband code division multiple access (WCDMA), and high speed packet access (HSPA). In addition, communication between a terminal device and a network device in the communication network may be performed according to any appropriate generation communication protocol, including but not limited to 1st generation (1G), 2nd generation (2G), 2.5G, 2.75G, 3rd generation (3G), 4th generation (4G), 4.5G, and 5th generation (5G) communication protocols, and/or any other protocol that is currently known or to be developed in the future. Embodiments of this disclosure may be applied to various communication systems, including cellular and non-cellular communication systems. In view of the rapid communication development, certainly, there will also be future types of communication technologies and systems that can embody this disclosure. Therefore, the scope of this disclosure should not be considered to be limited to the systems described above. For the purpose of illustration, embodiments of this disclosure are described with reference to a 5G communication system.

The term "terminal device" or "user equipment" used in this specification refers to any terminal device that can perform wireless communication. By way of illustration but not limitative example, the terminal device may also be referred to as a communication device, a user equipment (UE), a subscriber station (SS), a portable subscriber station, a mobile station (MS), or an access terminal (AT). The terminal device may include but is not limited to a mobile phone, a cellular phone, a smartphone, an IP voice (VoIP) phone, a wireless local loop phone, a tablet computer, a wearable terminal device, a personal digital assistant (PDA), a portable computer, a desktop computer, an image capture terminal device (for example, a digital camera), a game terminal device, a music storage and playback device, a vehicle-mounted wireless terminal device, a wireless endpoint, a mobile station, a notebook computer built-in device (LEE), a notebook computer external device (LME), a USB encryption dongle, a smart device, wireless customer premises equipment (CPE), an internet of things (IoT) device, a watch or another wearable device, a head mounted display (HMD), a vehicle, an uncrewed aerial vehicle, a medical device and application (for example, remote surgery), an industrial device and application (for example, a robot and/or another wireless device operating in industrial and/or automated processing chain environments), a consumer electronic device, a device commercial operation, an industrial wireless network, and/or the like. In the following descriptions, the terms "terminal device", "communication device", "terminal", "user equipment", and "UE" may be used interchangeably.

The term "network device" used in this specification includes but is not limited to a base station (BS), a gateway, a registration management entity, and another appropriate device in a communication system. The term "base station" or "BS" represents a NodeB (NodeB or NB), an evolved NodeB (eNodeB or eNB), an NR (new radio) NB (also referred to as a gNB), a remote radio unit (RRU), a radio head (RH), a remote radio head (RRH), a relay, or a low power node (for example, femto or pico). In addition, the network device may be a central unit (Central Unit, CU) or a distributed unit (Distributed Unit, DU). In some example embodiments, the CU and the DU may be placed in different locations. For example, the CU is placed in a central equipment room while the DU is placed in a heavy-traffic area. In some other example embodiments, the CU and the DU may alternatively be placed in a same location, for example, in a same equipment room or different components in a same rack.

The term "sidelink communication" or "SL communication" used in this specification refers to a technology used to directly transmit data between UEs through a sidelink. The UE may receive a configuration for sidelink communication from the base station. A UE 1 and a UE 2 perform sidelink communication. In this case, the UE 1 serves as a TX UE, and the UE 2 serves as an RX UE. The UE 1 may be in an IC state or an OOC state. When the UE 1 is in an RRC connected state, the UE 1 may obtain an SL resource (used for SL transmission) from the base station. In this case, the RRC connected state is referred to as a resource allocation mode of a mode 1. Specifically, the base station may schedule the SL resource for the UE by using DCI, or configure an SL configured grant (configured grant) for the UE by using an RRC message. When the UE 1 works in a mode 2 (which may be an RRC connected state, an RRC inactive state, an RRC idle state, or an OOC state), the UE may receive an SL resource pool configuration from the base station, or obtain the SL resource pool configuration from a preconfiguration, and then select an SL resource from an SL resource pool for sending. Specifically, the selection may be random selection. Alternatively, an interface that is between UEs and that is used for selection performed based on a result of sensing (sensing) or partial sensing is referred to as a PC5 interface, and an interface between the UE and the base station is referred to as a Uu interface.

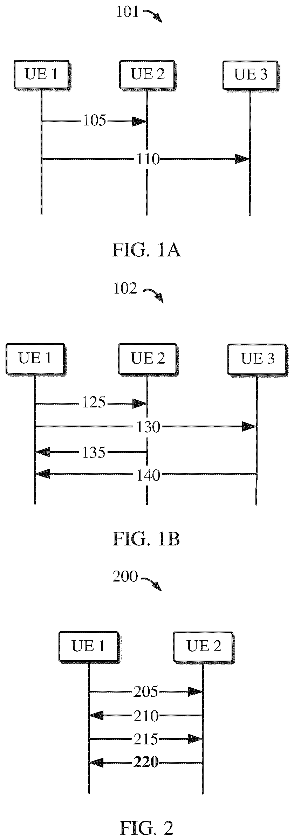

The term "discovery process" or "Discovery process" used in this specification refers to a process in which before establishing a unicast connection, two or more terminal devices send discovery messages through a PC5-S interface to discover each other. Currently, two discovery modes, that is, a mode A and a mode B, are widely used. This is described in detail below with reference to FIG. 1A and FIG. 1B.

The term "SL unicast connection establishment process" used in this specification refers to a process in which two terminal devices exchange a series of messages to establish a unicast connection. Before establishing the unicast connection, the terminal devices may need to discover each other through the discovery process. After the unicast connection is established, UE capabilities may be exchanged by using a PC5-RRC message. Currently, only a single-carrier operation is supported in R16/R17. Therefore, carriers used to transmit all messages are the same. In R18, a sidelink is to support multi-carrier communication, and two UEs related to communication may have different carrier capabilities. This is described in detail below with reference to FIG. 2.

The term "include" and variants thereof used in this specification indicate open inclusion, that is, "include but is not limited to". Unless otherwise stated, the term "or" represents "and/or". The term "based on" represents "at least partially based on". The terms "example embodiments" and "some embodiments" represent "at least one example embodiment". Other explicit and implicit definitions may also be included below.

Based on a manner in which a UE obtains an SL resource (for a TX UE), SL communication may be usually classified into a mode 1 (mode 1) and a mode 2 (mode 2). When working in the mode 1, the UE obtains the SL resource from a base station. Specifically, the base station may schedule the SL resource for the UE by using downlink control information (downlink control information (DCI)), or configure an SL configured grant (configured grant) for the UE by using an RRC (radio resource control) message. When working in the mode 2, the UE may receive an SL resource pool configuration from a base station, or obtain the SL resource pool configuration from a preconfiguration. Then, the UE selects, from an SL resource pool, an SL resource used for data transmission. A specific manner may be random selection or selection performed based on a result of sensing (sensing) or partial sensing (partial sensing). The UE working in the mode 1 is in an RRC connected state, and the UE working in the mode 2 may be in the RRC connected state, an RRC inactive state, an RRC idle state, or an OOC state. Whether the UE in the RRC connected state works in the mode 1 or the mode 2 depends on a configuration of the base station.

Before establishing a communication connection, two UEs may need to discover each other through a discovery process. Currently, two discovery modes, that is, a mode A and a mode B, are widely used. FIG. 1A is a diagram of a mode A discovery process 101. As shown in FIG. 1A, in a mode A, a UE 1 sends (105 and 110) a discovery announcement (Announcement) message on a sidelink. A UE 2 and a UE 3 sense the sidelink and receive the announcement message. Then, the UE 2 and the UE3 may separately establish a connection to the UE 1.

FIG. 1B is a diagram of a mode B discovery process 102. As shown in FIG. 1B, in a mode B, a UE 1 sends (125 and 130) a discovery solicitation (Solicitation) message on a sidelink. In response to the discovery solicitation message, a UE 2 and a UE 3 separately send a discovery response (Response) message to the UE 1. Then, the UE 2 and the UE3 may separately establish a connection to the UE 1.

In a V2X communication scenario, a mapping relationship (for broadcast communication, optionally including multicast communication) between a service type (for example, a PSID, an ITS-AID, or an AID) and a destination layer 2 identifier (for example, a destination L2 ID) is configured for an upper layer of a UE, and a mapping relationship between a service type and a carrier is further configured for the upper layer of the UE. The UE reports an association relationship between a destination L2 ID and a carrier to a base station by using an SUI (sidelink user equipment information) message, to indicate an interest in corresponding SL transmission and request an SL transmission resource and/or an SL bearer configuration. Specifically, in LTE, an anchor reported by the UE is a carrier. In other words, a form of a list in which each carrier is associated with one destination L2 ID is used. In NR, an anchor reported by the UE is a destination L2 ID. In other words, a form of a list in which each destination L2 ID is associated with one carrier is used, and the list may include one or more values. It should be understood that the terms "carrier", "frequency", "bandwidth", and "bandwidth part" used in this specification may be understood as equivalent or similar concepts, and in some embodiments and scenarios, the foregoing terms may be used interchangeably.

In LTE, V2X supports only broadcast communication, but supports a multi-carrier operation. In NR, V2X may support unicast, multicast, and broadcast communication, but an R16/R17 version supports only a single-carrier operation. Therefore, carriers used to transmit all messages are the same. Before the UE in an RRC connected state sends a message, the UE needs to report, by using the SUI message, a correspondence between a destination L2 ID and a carrier that correspond to the message, to obtain the SL transmission resource. FIG. 2 is a diagram of a unicast connection establishment process 200. As shown in FIG. 2, a UE 1 sends a direct communication request (DCR) message to a UE 2 in 205, where a source ID (for example, a source L2 ID) of the message is an L2 ID 1, and a destination ID (for example, a destination L2 ID) is an L2 ID 2. After receiving the DCR message, the UE 2 sends (210) a DSM command (direct security mode command) message to the UE 1, where a destination L2 ID of the message is the source L2 ID (namely, the L2 ID 1) of the DCR message, and a source L2 ID is an L2 ID 3. Particularly, the L2 ID 3 may be different from the L2 ID 2 (for example, if the DCR message is sent in a broadcast manner, after receiving the DCR message, the UE 2 allocates a source L2 ID to a unicast connection that is requested to be established, where the ID is the L2 ID 3). Certainly, the L2 ID 3 may alternatively be the same as the L2 ID 2. After receiving the DSM command message, the UE 1 sends (215) a DSM complete (direct security mode complete) message to the UE 2, where a source L2 ID of the message is the L2 ID 1, a destination L2 ID is the L2 ID 3, namely, the source L2 ID corresponding to the DSM command message. In addition, a source L2 ID and a destination L2 ID that are associated with any message subsequently sent by the UE 1 to the UE 2 are respectively the L2 ID 1 and the L2 ID 3. Similarly, a source L2 ID of a DCA (direct communication accept) message sent (220) by the UE 2 to the UE 1 is the L2 ID 3, a destination L2 ID is the L2 ID 1. In addition, a source L2 ID and a destination L2 ID that are associated with any message subsequently sent by the UE 2 to the UE 1 are respectively the L2 ID 3 and the L2 ID 1.

Considering that an SL is to support multi-carrier communication in the future, the unicast connection establishment process 200 in FIG. 2 is used as an example. It is assumed that the UE 1 is a UE that supports only an SL single-carrier operation (for example, an SL UE supports only communication that is based on a carrier 1), and the UE 2 is a UE that supports an SL multi-carrier operation (for example, the SL UE may support communication that is based on the carrier 1, a carrier 2, and a carrier 3). The UE 1 sends the DCR message to the UE 2 on the carrier 1. If the UE 2 sends the DSM command message to the UE 1 based on the carrier 2 or the carrier 3, the UE 1 cannot receive the message, and therefore cannot establish a unicast connection to the UE 2. It is clear that, this affects SL communication quality.

To resolve the foregoing problem and another potential problem faced in a current communication system, embodiments of this disclosure provide a communication mechanism in which a sidelink is used for a unicast connection establishment process or a discovery process. In the communication mechanism, considering that different UEs may have different carrier capabilities, a message is transmitted on a carrier that can ensure correct execution of a related process. This improves sidelink communication quality.

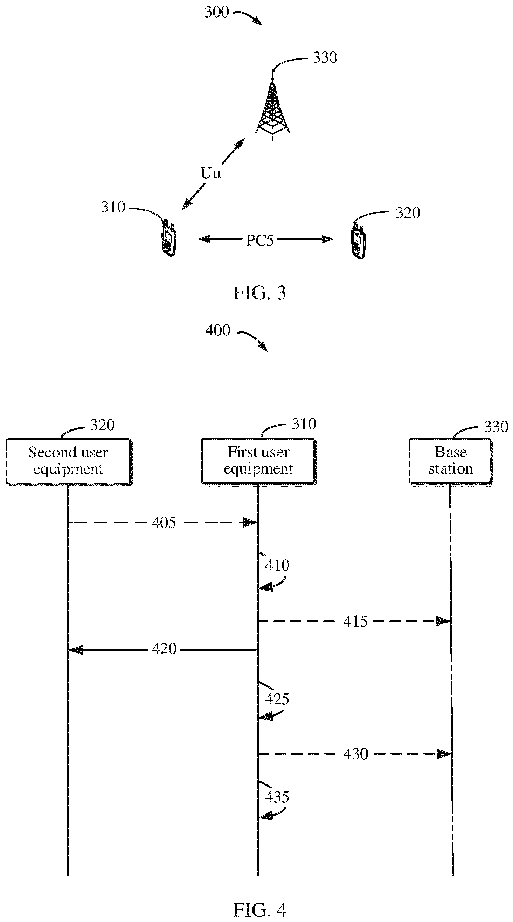

An example process used for sidelink communication according to embodiments of this disclosure is discussed below with reference to FIG. 3 to FIG. 6.

FIG. 3 is a diagram of an example network environment 300 in which an example embodiment of this disclosure can be implemented. As shown in FIG. 3, the network environment 300 includes a first user equipment 310, a second user equipment 320, and a base station 330. The base station 330 may communicate with a user equipment in a cell through a Uu interface. In addition, the first user equipment 310 and the second user equipment 320 may implement sidelink communication through a PC5 interface.

It should be understood that the network environment 300 is merely used as an example, and does not imply any limitation on the scope of this disclosure. Embodiments of this disclosure may also be embodied in another network environment or architecture. In addition, it should be further understood that the network environment 300 may further include other elements or entities configured to implement a communication connection, data transmission, and the like. For brevity of description, these elements or entities are not shown in FIG. 3, but this does not mean that embodiments of this disclosure do not have these elements or entities.

The network environment 300 according to this embodiment of this disclosure may be a wireless network that complies with any protocol that is currently known or to be developed in the future, including but not limited to a narrowband-internet of things (Narrowband-Internet of Things, NB-IoT) system, a global system for mobile communications (Global System for Mobile Communications, GSM), an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA2000) system, a time division-synchronization code division multiple access (Time Division-Synchronization Code Division Multiple Access, TD-SCDMA) system, a long term evolution (Long Term Evolution, LTE) system, and three application scenarios of a 5G mobile communication system: eMBB, URLLC, and eMTC.

FIG. 4 is a signaling diagram of an example interaction process used for sidelink communication according to an example embodiment of this disclosure. The example interaction process 400 may relate to the first user equipment 310, the second user equipment 320, and the base station 330 shown in FIG. 3. For purposes of discussion, the following describes the process 400 with reference to FIG. 3. However, it should be understood that the process is also applicable to another communication scenario and device.

In 405, the first user equipment 310 receives a first message from the second user equipment 320, where a source identifier (for example, a source L2 ID) of the first message is an L2 ID 1, and a destination identifier (for example, a destination L2 ID) is an L2 ID 2. The first message may be a PC5-RRC message or a PC5-S message. The PC5-S message includes a message used for a discovery process, for example, a discovery announcement message, a discovery solicitation message, and a discovery response message. The PC5-S message further includes a message used for unicast connection establishment, for example, a DCR message, a DSM command message, a DSM complete message, and a DCA message. Certainly, the first message may alternatively be another PC5-S message different from the foregoing message.

In 410, the first user equipment 310 determines, based on the first message, a first frequency used to transmit a second message to the second user equipment 320, where the second message is used as a response message for the first message. The determining step may be performed at an upper layer of the first user equipment 310, for example, a PC5-S layer, a V2X layer, or a Prose layer. In addition, the determining step may alternatively be performed at an AS layer of the first user equipment 310. The AS layer may be one or more of an RRC layer, an SDAP (Service Data Adaptation Protocol) layer, a PDCP (Packet Data Convergence Protocol) layer, an RLC (Radio Link Control) layer, a MAC layer, or a PHY layer.

A source L2 ID of the second message may be an L2 ID 3, and a destination L2 ID is the L2 ID 1, where the L2 ID 3 may be the same as or different from the L2 ID 2.

In some example embodiments, the first frequency may correspond to a carrier or a bandwidth part (BWP).

If the first message is the DCR message, the second message may be the DSM command message. In this case, the first user equipment 310 is equivalent to a receiving end of a unicast connection establishment process, and the second user equipment 320 is equivalent to an initiator of the unicast connection establishment process.

If the first message is the DSM command message, the second message may be the DSM complete message. In this case, the first user equipment 310 is equivalent to an initiator of a unicast connection establishment process, and the second user equipment 320 is equivalent to a receiving end of the unicast connection establishment process.

If the first message is the discovery solicitation message, the second message may be the discovery response message. In some cases, the first user equipment 310 may be equivalent to a receiving end of a unicast connection establishment process, and the second user equipment 320 may be equivalent to an initiator of the unicast connection establishment process. In other cases, the first user equipment 310 may be equivalent to an initiator of a unicast connection establishment process, and the second user equipment 320 may be equivalent to a receiving end of the unicast connection establishment process.

If the first message is the discovery announcement message, the second message may be the DCR message. In this case, the first user equipment 310 is equivalent to an initiator of a unicast connection establishment process, and the second user equipment 320 is equivalent to a receiving end of the unicast connection establishment process.

In a communication scenario shown in FIG. 4, the first user equipment 310 is a UE that supports multi-carrier communication, and supports at least the first frequency and a second frequency. The second user equipment 320 supports at least the first frequency, and may have a carrier capability different from a carrier capability of the first user equipment 310. For example, the second user equipment 320 may be a UE that supports only single-carrier communication, and certainly may alternatively be a UE that supports multi-carrier communication.

In some example embodiments, the first user equipment 310 may determine a receiving frequency of the first message as a sending frequency of the second message. Specifically, the first message is transmitted at the first frequency. To be specific, the first user equipment 310 receives the first message on the first frequency. Further, the first user equipment 310 may determine that the first frequency is to be used to send the second message. In this case, the receiving frequency of the first message is the same as the sending frequency of the second message. Optionally, in this embodiment, the first user equipment 310 may then send all messages for the second user equipment 320 by using the first frequency, and does not need to re-determine an available frequency based on a received message each time.

In some other example embodiments, the first user equipment 310 may determine a sending frequency of the second message based on information included in the first message. Specifically, the first message includes first frequency information, and the first frequency information indicates a frequency supported by the second user equipment 320. Further, the first user equipment 310 may determine the first frequency based on the frequency indicated by the first frequency information. Optionally, in this embodiment, the first user equipment 310 may then send all messages for the second user equipment 320 by using the first frequency, and does not need to re-determine an available frequency based on a received message each time.

In an example, the first user equipment 310 may determine, based on the frequency indicated by the first frequency information and a frequency supported by the first user equipment 310, a frequency jointly supported by the first user equipment and the second user equipment, to be specific, an intersection set of the frequencies supported by the first user equipment and the second user equipment. Further, the first user equipment 310 may select the first frequency from the jointly supported frequency to send the second message. It should be understood that the jointly supported frequency may include one or more frequencies.

Optionally, in 415, the first user equipment 310 may send a sidelink UE information (SUI) message to the base station 330, to indicate that the destination L2 ID of the second message corresponds to the first frequency. Alternatively, the first user equipment 310 may send an SUI message to the base station 330, to indicate that the destination L2 ID of the second message is associated with the determined jointly supported frequency.

In 420, the first user equipment 310 sends the second message to the second user equipment 320 at the first frequency.

In some example embodiments, the first user equipment 310 may update frequency information used to transmit the second message. Specifically, in 425, the first user equipment 310 may determine a candidate frequency used to communicate with the second user equipment 320, where the candidate frequency may include one or more frequencies. The determining step may be performed at the upper layer of the first user equipment 310, for example, the PC5-S layer, the V2X layer, or the Prose layer. In addition, the determining step may alternatively be performed at the AS layer of the first user equipment 310.

In an example, when the first user equipment 310 and the second user equipment 320 perform capability exchange of UEs in the unicast connection, the second user equipment 320 sends a user equipment capability exchange message to the first user equipment 310, to indicate frequency information associated with the second user equipment 320, where the user equipment capability exchange message may include a user equipment capability enquiry message, a user equipment capability information message, and the like.

Therefore, the first user equipment 310 may determine the candidate frequency based on an intersection set of the frequency information indicated in the capability exchange message and frequency information supported by the first user equipment 310. Alternatively, the first user equipment 310 may determine the candidate frequency based on the frequency information indicated in the capability exchange message, and frequency information and service type information that are supported by the first user equipment 310. The service type information may be frequency information corresponding to a service type included in the DCR message. When the DCR message includes a plurality of pieces of service type information, the service type information may be an intersection set of frequency information corresponding to all service types. A correspondence between a service type and frequency information may be determined based on a configuration at the upper layer (for example, the PCS-S layer, the V2X layer, or the Prose layer) of the first user equipment 310, or may be determined by the AS layer.

Then, in 430, the first user equipment 310 sends an SUI message to the base station 330, to indicate that the destination L2 ID of the second message corresponds to the determined candidate frequency.

Optionally, in 435, the first user equipment 310 may perform sidelink logical channel prioritization (SL LCP). Specifically, after the first user equipment 310 obtains an SL grant (SL Grant), the first user equipment 310 may select a destination (Destination) associated with frequency information corresponding to the destination L2 ID and the SL grant to perform SL transmission. In other words, when carrier information corresponding to the destination for SL transmission is selected through SL LCP, frequency information corresponding to the SL grant needs to be included. It should be understood that the destination L2 ID is merely one of examples of the destination.

It should be understood that although the operations in the process 400 are depicted in a particular order, this should not be understood as requiring such operations to be completed in the shown particular order or in a sequential order, or performing all the illustrated operations to obtain a desired result. Similarly, although the foregoing descriptions include some specific implementation details, this should not be construed as limiting the scope of any invention or claims, but rather as descriptions of specific example embodiments that may be specific to a particular invention. Some features described in this specification in the context of separate example embodiments may alternatively be integrated into a single example embodiment for implementation. Conversely, various features that are described in the context of a single example embodiment may alternatively be implemented separately in a plurality of example embodiments or in any appropriate sub-combination.

According to an example embodiment of this disclosure, a sidelink communication mechanism is provided. The mechanism is applicable to a unicast connection establishment process, a discovery process, or any other sidelink communication process. In the mechanism, a UE may determine, based on a carrier for receiving a message, a carrier for sending a response message of the message. Alternatively, a UE may show exchange carrier capability information in the unicast connection establishment process or the discovery process. In the foregoing manner, a message for the unicast connection establishment process or the discovery process can be received by a peer UE, to ensure that the unicast connection establishment process or the discovery process can be correctly performed, thereby improving SL communication quality.

An example embodiment of this disclosure further provides another sidelink communication mechanism. The communication mechanism may relate to the first user equipment 310, the second user equipment 320, and the base station 330 shown in FIG. 3. For purposes of discussion, the following provides descriptions with reference to FIG. 3. However, it should be understood that the mechanism is also applicable to another communication scenario and device.

In the communication mechanism, a default frequency used to transmit a message in a discovery process or a unicast connection establishment process or transmit a UE capability exchange message and the 1st PC5-RRC reconfiguration message is specified. The discovery process may relate to a discovery solicitation message, a discovery response message, a discovery announcement message, and the like. The unicast connection establishment process may relate to a DCR message, a DSM command message, a DSM complete message, a DCA message, and the like. The UE capability exchange message may relate to a UECapabilityEnquirySidelink message, a UECapabilityInformationSidelink message, and the like. The 1st PC5-RRC reconfiguration message is the 1st PC5-RRC reconfiguration message transmitted after the first user equipment 310 and the second user equipment 320 establish a unicast connection.

Specifically, the default frequency has been determined before the first user equipment 310 communicates with the second user equipment 320.

In some example embodiments, before communicating with the second user equipment 320, the first user equipment 310 may obtain first indication information for the default frequency. In an implementation, the default frequency may be a carrier or a BWP configured by the base station 330. For example, the default carrier or BWP is configured by using RRC dedicated signaling or a SIB message.

In another alternative implementation, the default frequency may alternatively be the 1st carrier or BWP in an SL frequency list broadcast by the base station 330. For example, if the first user equipment 310 determines that the first user equipment 310 is a user equipment that supports an R16 or R17 version, a user equipment that does not support an R18 version or a later version, or a user equipment that supports SL single-carrier communication, the first user equipment 310 determines to use the 1st carrier or BWP in the SL frequency list broadcast by the base station 330 as a frequency used for SL communication. In another example, if the first user equipment 310 determines that the first user equipment 310 is a user equipment that supports an R18 version or a later version, or a user equipment that supports SL multi-carrier communication, the first user equipment 310 determines to use the 1st carrier or BWP in the SL frequency list broadcast by the base station 330 as the default frequency.

In some other example embodiments, the default frequency may alternatively be preconfigured for the user equipment.

In an implementation, the default carrier or BWP may be configured by using a preconfigured message. For example, the default frequency is configured via a core network of the first user equipment 310.

In an alternative implementation, the default frequency may be locally preconfigured in the first user equipment 310. For example, the default frequency is written in a memory or a chip of the first user equipment 310 in advance.

In some other example embodiments, the default frequency may alternatively be a carrier or a BWP predefined in a related protocol, or may be a carrier or a BWP supported by NR SLR16/R17.

In some other example embodiments, the first user equipment 310 may obtain the default frequency from an upper layer (for example, a PC5-S layer, a V2X layer, or a Prose layer) configuration.

The first user equipment 310 transmits the foregoing message to the second user equipment 320 based on the default frequency. Then, after obtaining a sidelink grant, the first user equipment 310 may select, based on frequency information associated with the sidelink grant, a destination identifier corresponding to the frequency information to perform sidelink transmission. For example, a destination L2 ID may be used as one of examples of the destination identifier.

It is specified that the message in the unicast connection establishment process or the discovery process, the UE capability exchange message, or the 1st PC5-RRC reconfiguration message is transmitted based on the default carrier, to ensure that the related message can be received by a peer UE. In this way, the communication mechanism ensures that the unicast connection establishment process or the discovery process and transmission of the UE capability exchange message or the 1st PC5-RRC reconfiguration message can be correctly performed, thereby improving SL communication quality and system performance.

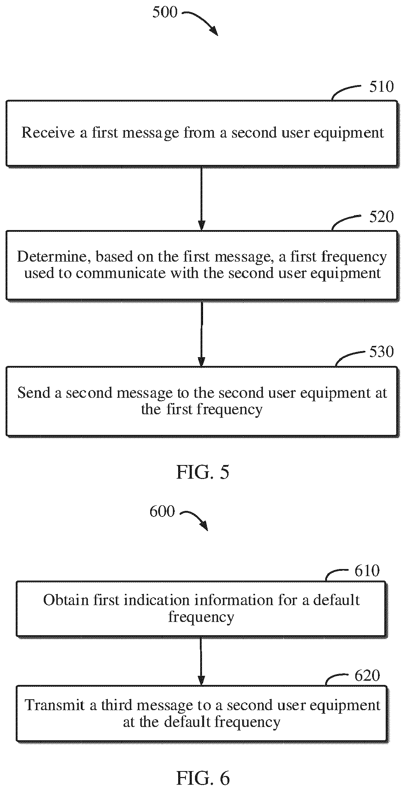

FIG. 5 is a flowchart of a sidelink communication method 500 according to an example embodiment of this disclosure. The method 500 may be implemented by the first user equipment 310 shown in FIG. 3. For ease of discussion, the method 500 is described below with reference to FIG. 3. It should be understood that the method 500 is also applicable to another communication scenario and device.

In 510, the first user equipment 310 receives a first message from a second user equipment 320, where a source identifier of the first message is a first layer 2 identifier. In some example embodiments, the first message may include a PC5-RRC message or a PC5-S message, and the PC5-S message includes but is not limited to: a direct communication request message, a direct security mode command message, a direct security mode complete message, a direct communication accept message, a discovery solicitation message, a discovery response message, a discovery announcement message, and another PC5-S message that is not of the foregoing message types.

In 520, the first user equipment 310 determines, based on the first message, a first frequency used to communicate with the second user equipment 320. For example, the first user equipment 310 is a UE that supports multi-carrier communication, and supports at least the first frequency and a second frequency. The second user equipment 320 supports at least the first frequency, and may be a UE that supports multi-carrier communication, or may be a UE that supports only single-carrier communication.

In some example embodiments, the first user equipment 310 may determine that the first message is received at the first frequency. Then, the first user equipment 310 may determine that the first frequency is to be used to send a second message, where the second message is used as a response to the first message.

In some example embodiments, the first message may include first frequency information, and the first frequency information indicates a frequency supported by the second user equipment 320. The first user equipment 310 may determine the first frequency based on the first frequency information.

In some example embodiments, the first user equipment 310 may determine, based on the first frequency information and a frequency supported by the first user equipment 310, a frequency jointly supported by the first user equipment 310 and the second user equipment 320. Then, the first user equipment 310 may select the first frequency from the jointly supported frequency to send the second message.

In 530, the first user equipment 310 sends the second message to the second user equipment 320 at the first frequency. A destination identifier of the second message is the first layer 2 identifier. In some examples, the second message may be associated with a unicast connection establishment process or a discovery process. In some other examples, the second message may be a message sent after a unicast connection is established.

In some example embodiments, the second message may include second frequency information, and the second frequency information indicates the frequency supported by the first user equipment 310 or indicates the jointly supported frequency.

In some example embodiments, the second message may include a PC5-RRC message or a PC5-S message. The PC5-S message includes but is not limited to: a direct communication request message, a direct security mode command message, a direct security mode complete message, a direct communication accept message, a discovery solicitation message, a discovery response message, a discovery announcement message, and another PC5-S message that is not of the foregoing message types. For example, if the first message is the DCR message, the second message may be the DSM command message. If the first message is the DSM command message, the second message may be the DSM complete message. If the first message is the discovery solicitation message, the second message may be the discovery response message. If the first message is the discovery announcement message, the second message may be the DCR message.

In some example embodiments, the first user equipment 310 may send a sidelink user equipment information message to a base station 330. The sidelink user equipment information message may indicate that the first layer 2 identifier is associated with the first frequency, where the source identifier of the first message is the first layer 2 identifier, and a destination identifier of the first message is a second layer 2 identifier. A source identifier of the second message is a third layer 2 identifier, and the second layer 2 identifier is the same as the third layer 2 identifier, or the second layer 2 identifier is different from the third layer 2 identifier.

In some example embodiments, the first user equipment 310 may send a sidelink user equipment information message to a base station 330. The sidelink user equipment information message may indicate that the first layer 2 identifier is associated with the jointly supported frequency, where the source identifier of the first message is the first layer 2 identifier, and a destination identifier of the first message is a second layer 2 identifier. A source identifier of the second message is a third layer 2 identifier, and the second layer 2 identifier is the same as the third layer 2 identifier, or the second layer 2 identifier is different from the third layer 2 identifier.

In some example embodiments, the first user equipment 310 may determine a candidate frequency used to communicate with the second user equipment 320, and the first frequency is determined from the candidate frequency.

In some example embodiments, the candidate frequency may be determined based on frequency information that is indicated by a user equipment capability exchange message received from the second user equipment 320 and that is associated with the second user equipment. The user equipment capability exchange message may include a user equipment capability enquiry message or a user equipment capability information message.

In some example embodiments, the candidate frequency may alternatively be determined based on at least one of the frequency supported by the first user equipment 310 and frequency information corresponding to service type information.

In some example embodiments, the first user equipment 310 may send a user equipment capability exchange message to the second user equipment 320. The user equipment capability exchange message may include information indicating that the first layer 2 identifier is associated with the candidate frequency. The user equipment capability exchange message may include a user equipment capability enquiry message or a user equipment capability information message, and the source identifier of the first message is the first layer 2 identifier.

In some example embodiments, the first user equipment 310 may send sidelink user equipment information to a base station 330. The sidelink user equipment information may include that the first layer 2 identifier is associated with the candidate frequency, and the destination identifier of the second message is the first layer 2 identifier.

In some example embodiments, after obtaining a sidelink grant, the first user equipment 310 may select, based on frequency information associated with the sidelink grant, a destination identifier corresponding to the frequency information to perform sidelink transmission.

In some example embodiments, the first frequency may correspond to a carrier or a bandwidth part.

According to the method provided in this embodiment of this disclosure, sidelink communication may be implemented on a terminal device side. The method can facilitate execution of the unicast connection establishment process or the discovery process. Exchange carrier capability information is shown or a receiving carrier is used as a sending carrier of a response message, so that it can be ensured that the unicast connection establishment process or the discovery process is correctly performed, thereby improving SL communication quality and system performance.

FIG. 6 is a flowchart of a sidelink communication method 600 according to an example embodiment of this disclosure. The method 600 may be implemented by the first user equipment 310 shown in FIG. 3. For ease of discussion, the method 600 is described below with reference to FIG. 3. It should be understood that the method 600 is also applicable to another communication scenario and device.

In 610, the first user equipment 310 obtains first indication information for a default frequency. The default frequency may be used to communicate with a second user equipment 320. In some example embodiments, the default frequency may correspond to a carrier or a BWP.

In some example embodiments, the default frequency may be a carrier or a BWP that is preconfigured by a network, predefined in a protocol, or supported by NR SL R16/R17.

In some example embodiments, the default frequency may be configured by a base station 330.

In some example embodiments, the default frequency may be obtained from an upper layer of the first user equipment 310.

In 620, the first user equipment 310 transmits, to the second user equipment 320 at the default frequency, at least one of the following: a direct communication request message, a direct security mode command message, a direct security mode complete message, a direct communication accept message, a discovery solicitation message, a discovery response message, a discovery announcement message, a UE capability exchange message, and the 1st PC5-RRC reconfiguration message. The first user equipment 310 may support multi-carrier communication, and the second user equipment 320 may support single-carrier communication or multi-carrier communication.

In some example embodiments, the first user equipment 310 may obtain second indication information. The second indication information may include upper layer indication information or indication information received from the network, to indicate whether a third message associated with a destination identifier or a service type is transmitted based on the default frequency. The third message may include at least one of the following: a direct communication request message, a direct security mode command message, a direct security mode complete message, a direct communication accept message, a discovery solicitation message, a discovery response message, a discovery announcement message, a UE capability exchange message, and the 1st PC5-RRC reconfiguration message.

In some example embodiments, a fourth message associated with the third message is also transmitted at the default frequency. The fourth message includes at least one of the following: a direct communication request message, a direct security mode command message, a direct security mode complete message, a direct communication accept message, a discovery solicitation message, a discovery response message, a discovery announcement message, a UE capability exchange message, and the 1st PC5-RRC reconfiguration message.

In some example embodiments, after obtaining a sidelink grant, the first user equipment 310 may select, based on frequency information associated with the sidelink grant, a destination identifier corresponding to the frequency information to perform sidelink transmission.

The method provided in this embodiment of this disclosure may be used to implement a unicast connection establishment process or a discovery process between terminal devices. In the method, it is specified that a message in the unicast connection establishment process or the discovery process, the UE capability exchange message, or the 1st PC5-RRC reconfiguration message is transmitted based on a default carrier or BWP, so that the related message can be received by a peer UE, to ensure that the unicast connection establishment process or the discovery process can be correctly performed, thereby improving SL communication quality and system performance.

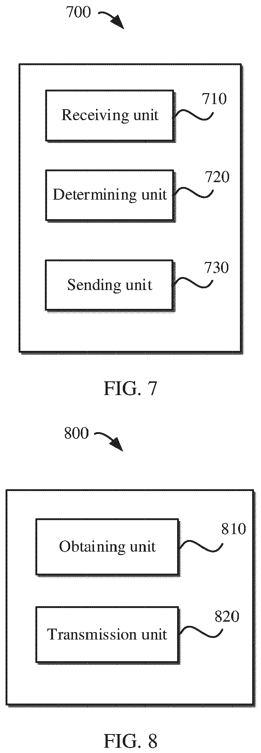

FIG. 7 is a block diagram of a communication apparatus 700 that may implement some embodiments of this disclosure. The communication apparatus 700 can be configured to implement a first user equipment 310, a part of the first user equipment 310, a chip in the first user equipment 310, or the like shown in FIG. 3. It should be understood that the communication apparatus 700 is merely used as an example and does not imply any limitation on the scope of this disclosure. Embodiments of this disclosure may be further embodied in different communication apparatuses. In addition, it should be further understood that the communication apparatus 700 may further include other elements, modules, or entities that are not shown for clarity, but this does not mean that embodiments of this disclosure do not have these elements or entities. The scope of this disclosure is not limited in this respect.

As shown in FIG. 7, the communication apparatus 700 includes a receiving unit 710, a determining unit 720, and a sending unit 730. It should be understood that FIG. 7 shows only an example implementation. For example, although the receiving unit 710 and the sending unit 730 are shown as independent components in FIG. 7, in another implementation, the receiving unit 710 and the sending unit 730 may alternatively be integrated to implement a receiving and sending function.

The receiving unit 710 may be configured to receive a first message from a second user equipment 320. A source identifier of the first message may be a first layer 2 identifier.

In some example embodiments, the first message includes a PC5-RRC message or a PC5-S message. The PC5-S message may include one of the following: a direct communication request message, a direct security mode command message, a direct security mode complete message, a direct communication accept message, a discovery solicitation message, a discovery response message, and a discovery announcement message.

The determining unit 720 may determine, based on the first message, a first frequency used to communicate with the second user equipment 320. The communication apparatus 700 supports multi-carrier communication, and supports at least the first frequency and a second frequency. The second user equipment 320 supports single-carrier communication or multi-carrier communication, and the second user equipment 320 supports at least the first frequency.

In some example embodiments, the first frequency corresponds to a carrier or a BWP.

The sending unit 730 may send a second message to the second user equipment 320 at the first frequency. A destination identifier of the second message is the first layer 2 identifier, and the second message is associated with a unicast connection establishment process or a discovery process.

In some example embodiments, the determining unit 720 may be configured to determine that the first message is received at the first frequency. Then, the determining unit 720 may determine that the first frequency is to be used to send the second message, where the second message is used as a response to the first message.

In some example embodiments, the first message may include first frequency information. The first frequency information may indicate a frequency supported by the second user equipment 320, and the determining unit 720 may be configured to determine the first frequency based on the first frequency information.

In some example embodiments, the determining unit 720 may be configured to determine, based on the first frequency information and a frequency supported by the communication apparatus 700, a frequency jointly supported by the communication apparatus 700 and the second user equipment 320. Then, the determining unit 720 may select the first frequency from the jointly supported frequency to send the second message.

In some example embodiments, the second message may include second frequency information, and the second frequency information indicates the frequency supported by the communication apparatus 700 or indicates the jointly supported frequency.

In some example embodiments, the second message may include a PC5-RRC message or a PC5-S message. The PC5-S message may include one of the following: a direct communication request message, a direct security mode command message, a direct security mode complete message, a direct communication accept message, a discovery solicitation message, a discovery response message, and a discovery announcement message.

In some example embodiments, the sending unit 730 is further configured to send a sidelink user equipment information message to a base station 330. The sidelink user equipment information message may indicate that the first layer 2 identifier is associated with the first frequency, the source identifier of the first message is the first layer 2 identifier, a destination identifier of the first message is a second layer 2 identifier, a source identifier of the second message is a third layer 2 identifier, and the second layer 2 identifier is the same as the third layer 2 identifier, or the second layer 2 identifier is different from the third layer 2 identifier.

In some example embodiments, the sending unit 730 is further configured to send a sidelink user equipment information message to a base station 330. The sidelink user equipment information message may indicate that the first layer 2 identifier is associated with the jointly supported frequency, the source identifier of the first message is the first layer 2 identifier, a destination identifier of the first message is a second layer 2 identifier, a source identifier of the second message is a third layer 2 identifier, and the second layer 2 identifier is the same as the third layer 2 identifier, or the second layer 2 identifier is different from the third layer 2 identifier.

In some example embodiments, the determining unit 720 is further configured to determine a candidate frequency used to communicate with the second user equipment 320, and the first frequency is determined from the candidate frequency.

In some example embodiments, the candidate frequency may be determined based on frequency information that is indicated by a user equipment capability exchange message received from the second user equipment 320 and that is associated with the second user equipment 320. The user equipment capability exchange message includes a user equipment capability enquiry message or a user equipment capability information message.

In some example embodiments, the candidate frequency may alternatively be determined based on at least one of a frequency supported by the communication apparatus 700 and frequency information corresponding to service type information.

In some example embodiments, the sending unit 730 may be further configured to send a user equipment capability exchange message to the second user equipment 320. The user equipment capability exchange message may include information indicating that the first layer 2 identifier is associated with the candidate frequency, the user equipment capability exchange message includes a user equipment capability enquiry message or a user equipment capability information message, and the source identifier of the first message is the first layer 2 identifier.

In some example embodiments, the sending unit 730 may be further configured to send sidelink user equipment information to a base station 330. The sidelink user equipment information may include that the first layer 2 identifier is associated with the candidate frequency, and the destination identifier of the second message is the first layer 2 identifier.

In some example embodiments, the communication apparatus 700 may further include a selection unit. The selection unit is configured to: after the sidelink grant is obtained, select, based on frequency information associated with the sidelink grant, a destination identifier corresponding to the frequency information to perform sidelink transmission.

FIG. 8 is a block diagram of a communication apparatus 800 that may implement some embodiments of this disclosure. The communication apparatus 800 can be configured to implement a first user equipment 310, a part of the first user equipment 310, a chip in the first user equipment 310, or the like shown in FIG. 3. It should be understood that the communication apparatus 800 is merely used as an example and does not imply any limitation on the scope of this disclosure. Embodiments of this disclosure may be further embodied in different communication apparatuses. In addition, it should be further understood that the communication apparatus 800 may further include other elements, modules, or entities that are not shown for clarity, but this does not mean that embodiments of this disclosure do not have these elements or entities. The scope of this disclosure is not limited in this respect.

As shown in FIG. 8, the communication apparatus 800 includes an obtaining unit 810 and a transmission unit 820. It should be understood that FIG. 8 shows only an example implementation. For example, although a receiving function and a sending function in FIG. 8 are implemented by a single transmission unit 820, in another implementation, the receiving function and the sending function may be implemented by separate units.

The obtaining unit 810 may be configured to obtain first indication information for a default frequency. The default frequency may be used to communicate with a second user equipment 320. In some example embodiments, the default frequency may correspond to a carrier or a BWP.

The transmission unit 820 may be configured to transmit a third message to the second user equipment 320 at the default frequency. The third message includes a PC5-RRC message or a PC5-S message. The PC5-S message may include at least one of the following: a direct communication request message, a direct security mode command message, a direct security mode complete message, a direct communication accept message, a discovery solicitation message, a discovery response message, a discovery announcement message, and another PC5-S message that is not of the foregoing message types.

In some example embodiments, the communication apparatus 800 may support multi-carrier communication, and the second user equipment 320 may support single-carrier communication or multi-carrier communication.

In some example embodiments, the default frequency may be preconfigured by a network or predefined.

In some example embodiments, the default frequency may be obtained from an upper layer of the communication apparatus 800.

In some example embodiments, the obtaining unit 810 may be further configured to obtain second indication information. The second indication information may include upper layer indication information or indication information received from a network, to indicate whether a third message associated with a destination layer 2 identifier or a service type is transmitted based on the default frequency.

In some example embodiments, a fourth message associated with the third message may also be transmitted by using a default frequency.

In some example embodiments, the communication apparatus 800 may further include a selection unit. The selection unit is configured to: after the sidelink grant is obtained, select, based on frequency information associated with the sidelink grant, a destination identifier corresponding to the frequency information to perform sidelink transmission.

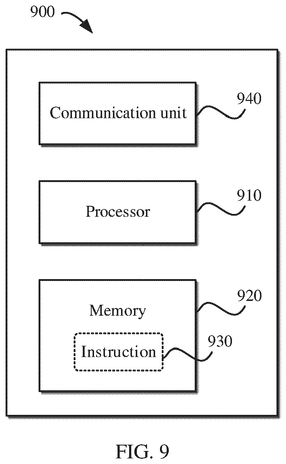

FIG. 9 is a block diagram of a communication apparatus 900 that may implement some embodiments of this disclosure. The communication apparatus 900 can be configured to implement a first user equipment 310 shown in FIG. 3. The communication apparatus 900 may also be implemented as a chip or a chip system. It should be understood that the communication apparatus 900 is merely used for example purposes, and does not imply any limitation on the scope of this disclosure. Embodiments of this disclosure may be further embodied in different devices. It should be further understood that the communication apparatus 900 may further include other elements or entities that are not shown for ease of description, but this does not mean that embodiments of this disclosure do not have these elements or entities.

As shown in FIG. 9, the communication apparatus 900 includes a processor 910, and the processor 910 controls an operation and a function of the communication apparatus 900. For example, in some example embodiments, the processor 910 may perform various operations by using instructions 930 stored in a memory 920 coupled to the processor 910. The memory 920 may be any suitable type applicable to a local technical environment, and may be implemented by using any suitable data storage technology, including but not limited to a semiconductor-based storage device, a magnetic storage device and system, and an optical storage device and system. Although only one memory unit is shown in FIG. 9, there may be a plurality of physically different memory units in the communication apparatus 900. It should be understood that the processor 910 and the memory 920 may be disposed separately as independent components, or may be integrated together. This is not limited in this application.

The processor 910 may be any suitable type suitable for a local technical environment, and may include but is not limited to one or more of a general-purpose computer, a dedicated computer, a microcontroller, a digital signal controller (Digital Signal Processor, DSP), and a controller-based multi-core controller architecture. The communication apparatus 900 may also include a plurality of processors, for example, an application-specific integrated circuit chip, which belongs to a clock synchronized with a main processor in time. The processor 910 is coupled to a communication unit 940. The communication unit 940 may receive and send information by using a wireless signal or by using an optical fiber, a cable, and/or another component.

The memory 920 may include one or more non-volatile memories and one or more volatile memories. An example of the nonvolatile memory includes but is not limited to a read-only memory (Read-Only Memory, ROM), an erasable programmable read-only memory (Erasable Programmable Read-Only Memory, EPROM), a flash memory, a hard disk, a compact disc (Compact Disc, CD), a digital versatile disc (Digital Versatile Disc, DVD), or another magnetic storage and/or optical storage. An example of the volatile memory includes but is not limited to a random access memory (Random Access Memory, RAM) and the like.

Embodiments of this disclosure may be implemented by using a computer program, so that the communication apparatus 900 may perform any process or method discussed with reference to FIG. 4 to FIG. 6. Embodiments of this disclosure may alternatively be implemented by using hardware or by using a combination of software and hardware. The computer program includes computer-executable instructions 930 executed by the processor 910. The computer program may be stored in the memory 920. The processor 910 may perform any suitable action and processing by loading a computer program into the RAM.

The functional modules, units, and the like of the communication apparatus 700 or 800 described above may be stored in the memory 920 in a manner of computer program code or instructions 930. The processor executes the program code or the instructions in the memory 920, to enable the communication apparatus 700 or 800 to perform the processing processes implemented by the first user equipment 310 in FIG. 5 and FIG. 6.

In some embodiments, a computer program may be tangibly included in a computer-readable medium, and the computer-readable medium may be included in the communication apparatus 900 (for example, in the memory 920) or another storage device that may be accessed by the communication apparatus 900. The computer program may be loaded from the computer-readable medium to a RAM for execution. The computer-readable medium may include any type of tangible nonvolatile memory, for example, a ROM, an EPROM, a flash memory, a hard disk, a CD, or a DVD.

Generally, various example embodiments of this disclosure may be implemented in hardware or dedicated circuit, software, logic, or any combination thereof. Some aspects may be implemented in hardware, while other aspects may be implemented in firmware or software that may be executed by a controller, a microprocessor, or another computing device. When aspects of the example embodiments of this disclosure are illustrated or described as block diagrams or flowcharts, or represented using specific other figures, it may be understood that the blocks, apparatuses, systems, technologies, or methods described herein may be implemented as nonlimiting examples in hardware, software, firmware, dedicated circuit or logic, general-purpose hardware or controllers, or other computing devices, or some combinations thereof.

In an example, example embodiments of this disclosure may be described in the context of machine-executable or computer-executable instructions. The machine-executable instructions are, for example, a program module executed in a device included in a real or virtual processor of a destination. Generally, the program module includes a routine, a program, a library, an object, a class, a component, a data structure, and the like, and executes a specific task or implements a specific abstract data structure. In various example embodiments, functions of the program modules may be combined or split between the described program modules. The machine-executable instructions for the program module may be executed locally or within a distributed device. In the distributed device, the program module may be located in both a local storage medium and a remote storage medium.

Computer program code used for implementing the method in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of this disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

In the context of this disclosure, a machine-readable medium or a computer-readable medium may be any tangible medium that includes or stores a program for or has a program related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

In addition, although the operations are depicted in a particular order, this should not be understood as requiring such operations to be completed in the particular order or in a sequential order, or performing all the illustrated operations to obtain a desired result. In some cases, multitasking or parallel processing is beneficial. Similarly, although the foregoing descriptions include some specific implementation details, this should not be construed as limiting the scope of any invention or claims, but rather as descriptions of specific example embodiments that may be specific to a particular invention. Some features described in this specification in the context of separate example embodiments may alternatively be integrated into a single example embodiment for implementation. Conversely, various features that are described in the context of a single example embodiment may alternatively be implemented separately in a plurality of example embodiments or in any appropriate sub-combination.

Although the subject matter has been described in language specific to structural features and/or methodological actions, it should be understood that the subject matter defined in the appended claims is not limited to the specific features or actions described above. Rather, the specific features and actions described above are disclosed as example forms of implementing the claims.

## Claims

1. A communication method, comprising:
receiving, by a first user equipment, a first message from a second user equipment, wherein a source identifier of the first message is a first layer 2 identifier;
determining, by the first user equipment based on the first message, a first frequency used to communicate with the second user equipment, wherein the first user equipment supports at least the first frequency and a second frequency, and the second user equipment supports at least the first frequency; and
sending, by the first user equipment, a second message to the second user equipment at the first frequency, wherein a destination identifier of the second message is the first layer 2 identifier, and the second message is associated with a unicast connection establishment process or a discovery process.

2. The method according to claim 1, wherein the first message comprises a PC5-RRC message or a PC5-S message.

3. The method according to claim 1, wherein the determining a first frequency used to communicate with the second user equipment comprises:
determining, by the first user equipment, that the first message is received at the first frequency; and
determining, by the first user equipment, that the first frequency is to be used to send the second message, wherein the second message is used as a response to the first message.

4. The method according to claim 1, wherein the first message comprises first frequency information, the first frequency information indicates a frequency supported by the second user equipment, and the determining a first frequency used to communicate with the second user equipment comprises:
determining, by the first user equipment, the first frequency based on the first frequency information, wherein the second message is used as a response to the first message.

5. The method according to claim 4, wherein the determining the first frequency further comprises:
determining, by the first user equipment based on the first frequency information and a frequency supported by the first user equipment, a frequency jointly supported by the first user equipment and the second user equipment; and
selecting, by the first user equipment, the first frequency from the jointly supported frequency to send the second message.

6. The method according to claim 5, wherein the second message comprises second frequency information, and the second frequency information indicates the frequency supported by the first user equipment or indicates the jointly supported frequency.

7. The method according to claim 3 or 4, wherein the second message comprises a PC5-RRC message or a PC5-S message.

8. The method according to claim 3, wherein the method further comprises:
sending, by the first user equipment, a sidelink user equipment information message to a base station, wherein the sidelink user equipment information message indicates that the first layer 2 identifier is associated with the first frequency, the source identifier of the first message is the first layer 2 identifier, a destination identifier of the first message is a second layer 2 identifier, a source identifier of the second message is a third layer 2 identifier, and the second layer 2 identifier is the same as the third layer 2 identifier, or the second layer 2 identifier is different from the third layer 2 identifier.

9. The method according to claim 5, wherein the method further comprises:
sending, by the first user equipment, a sidelink user equipment information message to a base station, wherein the sidelink user equipment information message indicates that the first layer 2 identifier is associated with the jointly supported frequency, the source identifier of the first message is the first layer 2 identifier, a destination identifier of the first message is a second layer 2 identifier, a source identifier of the second message is a third layer 2 identifier, and the second layer 2 identifier is the same as the third layer 2 identifier, or the second layer 2 identifier is different from the third layer 2 identifier.

10. The method according to claim 3 or 4, wherein the method further comprises:
determining, by the first user equipment, a candidate frequency used to communicate with the second user equipment, wherein the first frequency is determined from the candidate frequency.

11. The method according to claim 10, wherein the candidate frequency is determined based on at least frequency information that is indicated by a user equipment capability exchange message received from the second user equipment and that is associated with the second user equipment, and the user equipment capability exchange message comprises a user equipment capability enquiry message or a user equipment capability information message.

12. The method according to claim 11, wherein the candidate frequency is further determined based on at least one of a frequency supported by the first user equipment and frequency information corresponding to service type information.

13. The method according to claim 10, wherein the method further comprises:
sending, by the first user equipment, a user equipment capability exchange message to the second user equipment, wherein the user equipment capability exchange message comprises information indicating that the first layer 2 identifier is associated with the candidate frequency, the user equipment capability exchange message comprises a user equipment capability enquiry message or a user equipment capability information message, and the source identifier of the first message is the first layer 2 identifier.

14. The method according to claim 10, wherein the method further comprises:
sending, by the first user equipment, sidelink user equipment information to a base station, wherein the sidelink user equipment information comprises that the first layer 2 identifier is associated with the candidate frequency, and the destination identifier of the second message is the first layer 2 identifier.

15. The method according to claim 1, wherein the method further comprises:
after obtaining a sidelink grant, selecting, by the first user equipment based on frequency information associated with the sidelink grant, a destination identifier corresponding to the frequency information to perform sidelink transmission.

16. The method according to claim 1, wherein the first frequency corresponds to a carrier or a bandwidth part.

17. The method according to claim 1, wherein the first user equipment supports multi-carrier communication, and the second user equipment supports single-carrier communication or multi-carrier communication.

18. A communication method, comprising:
obtaining, by a first user equipment, first indication information for a default frequency, wherein the default frequency is used to communicate with a second user equipment; and
transmitting, by the first user equipment, a third message to the second user equipment at the default frequency, wherein the third message comprises a PC5-RRC message or a PC5-S message.

19. The method according to claim 18, wherein the default frequency is preconfigured by a network or predefined.

20. The method according to claim 18, wherein the default frequency is obtained from an upper layer of the first user equipment.

21. The method according to claim 18, wherein the method further comprises:
obtaining, by the first user equipment, second indication information, wherein the second indication information comprises upper layer indication information or indication information received from a network, to indicate whether a third message associated with a destination layer 2 identifier or a service type is transmitted based on the default frequency.

22. The method according to claim 18, wherein a fourth message associated with the third message is also transmitted at the default frequency.

23. The method according to claim 18, wherein the method further comprises:
after obtaining a sidelink grant, selecting, by the first user equipment based on frequency information associated with the sidelink grant, a destination identifier corresponding to the frequency information to perform sidelink transmission.

24. The method according to claim 18, wherein the default frequency corresponds to a carrier or a bandwidth part.

25. The method according to claim 18, wherein the first user equipment supports multi-carrier communication, and the second user equipment supports single-carrier communication or multi-carrier communication.

26. A communication apparatus, comprising:
at least one processor; and
at least one memory comprising computer program code, wherein the at least one memory and the computer program code are configured to work with the at least one processor to enable the communication apparatus to perform the method according to any one of claims 1 to 17 and the method according to any one of claims 18 to 25.

27. A computer-readable storage medium, wherein the computer-readable storage medium stores computer-executable instructions, and when the computer-executable instructions are executed by a processor, the processor is enabled to perform the method according to any one of claims 1 to 17 and the method according to any one of claims 18 to 25.

28. A computer program product, comprising computer-executable instructions, wherein when the computer-executable instructions are executed by a processor, the method according to any one of claims 1 to 17 and the method according to any one of claims 18 to 25 is implemented.
